# EUROPEAN PATENT APPLICATION

(11) **EP 0 666 237 A1**
(43) Date of publication of application: **09.08.1995**
(21) Application number: 93921117.3
(22) Date of filing: 05.10.1993
(51) Int. Cl.: C01B 5/00

(54) **WATER GENERATING METHOD**

(30) Priority: 05.10.1992 JP 266383/92
(71) Applicant: OHMI, Tadahiro, Sendai-shi Miyagi-ken 980 (JP)
(72) Inventor: OHMI, Tadahiro, Sendai-shi Miyagi-ken 980 (JP)
(74) Representative: Weitzel, Wolfgang, Dr.-Ing.
(86) International application number: JP9301430
(87) International publication number: WO9407795

(57) **Abstract**

A water generating method which is capable of providing a large quantity of water-mixed gas having an accurate concentration of water in a wide range from a low level of the order of ppt and ppb to a high level of the order of percentage, and a super-high cleanness, and which is quick to respond and simple to maintain. A method of generating water on reaction between hydrogen and oxygen consisting of the steps of generating a first mixed gas by mixing hydrogen, oxygen and an inert gas, and generating water by introducing the first mixed gas into a reaction tube, which is formed out of a material having a catalytic action capable of turning hydrogen and oxygen into radicals, and heating the interior of the reaction tube so as to cause a reaction between the hydrogen and oxygen contained in the first gas and produce water.

## Description

### Technical Field

The present invention relates to a water generating method.

### Background Art

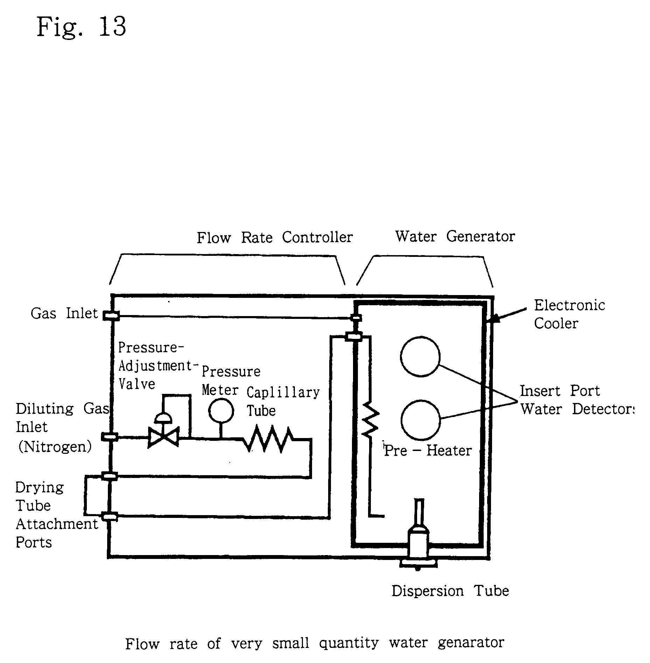

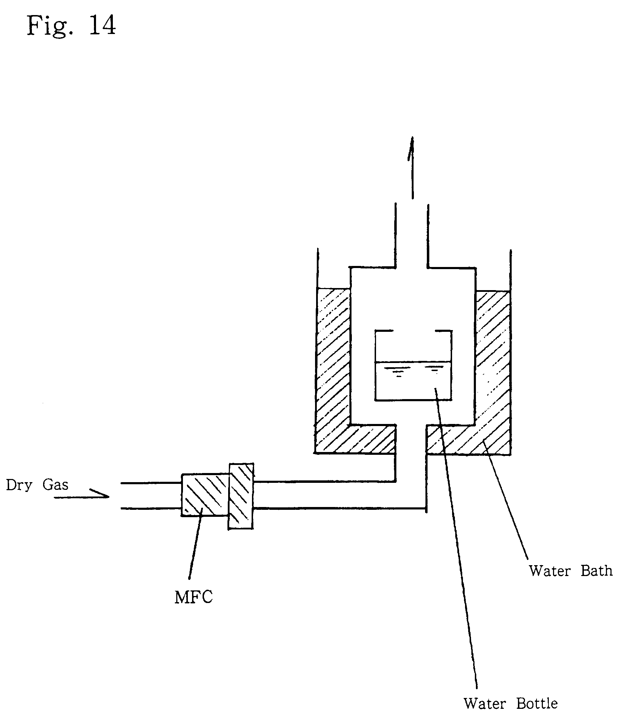

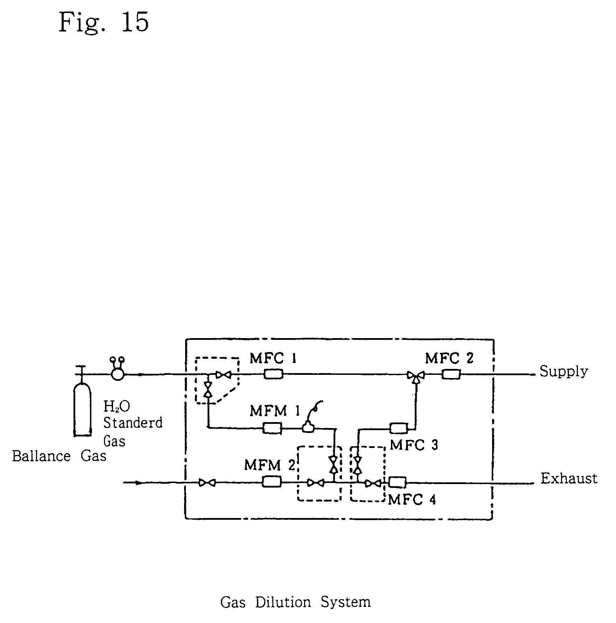

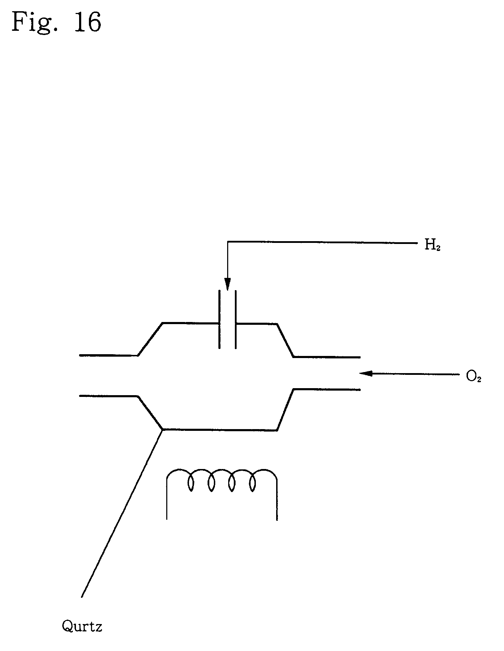

(1) Diffusion tube water generating method
   In this method, water is introduced into a resin tube which is permeated by water molecules, and taking advantage of the fact that the speed at which water molecules permeate the resin membrane to the exterior is constant at a freely selected temperature, the diffusing water is caused to be mixed into an inert gas flowing on the outside of the diffusion tube, and thus water is generated. The control of the water concentration is determined by the temperature of the diffusion tube and the flow rate of the inert gas. A schematic view of such an apparatus is shown in Figure 13.
(2) Water generating method employing water vapor pressure
   In this method, a sealed vessel (isolated from the outer air) with water therein is maintained at a freely selected constant temperature, an inert gas is passed through the gas phase portion or the water, and inert gas is obtained which contains a water component corresponding to the vapor pressure of water at the freely selected temperature. The control of the water concentration is accomplished by means of the temperature (vapor pressure) within the sealed vessel. A schematic view of such an apparatus is shown in Figure 14.
(3) Water generating method in which a standard gas contained in a cylinder is diluted
   In this method, a gas having a standard water content stored in a cylinder is diluted to a freely selected dilution ratio using an inert gas, and a freely selected water concentration is generated. A schematic view of such an apparatus is shown in Figure 15.
(4) In this method, hydrogen and oxygen gases are burned in a quartz reactor at temperatures of 700°C or more, and water is generated. A schematic view of such an apparatus is shown in Figure 16.

However, the conventional technology described above has the following problems.
(a) In technique (1), as a result of contamination with hydrocarbon-type impurities from the diffusion tube, a superpure water-mixed gas cannot be obtained.
(b) In technique (1), as water emitted from the diffusion tube is constantly being generated on a level of ppb, it is impossible to control the water concentrations at low concentrations on the level of ppb or ppt.
(c) Technique (1) has poor water concentration responsivity.
(d) In technique (1), changes in the diffusion tube are produced over time, so that the reliability of the water concentration is low.
(e) In techniques (1) and (2), accurate temperature control is necessary, so that maintenance and handling are difficult.
(f) In technique (2), a long period of time is required for apparatus start-up.
(g) In technique (2), the reliability of the water concentration is low.
(h) In technique (2), a long period of time is required for calibration.
(i) In technique (3), the reliability of the water concentration is low (there are no standard gases having accurate water concentration).
(j) It is difficult to generate high concentrations and large amounts of water using technique (3).

The present invention has as an object thereof to provide a water generating method which is capable of providing a large quantity of water-mixed gas having an accurate water concentration in a wide range from a low level, on the order of ppt and ppb, to a high level, on the order of percentage, and super-high cleanness, and which, furthermore, is quick to respond and simple to maintain.

### Disclosure of the Invention

The water generating method of the present invention is characterized in comprising, in a method for generating water by reacting hydrogen and oxygen, a mixed gas preparation process in which hydrogen, oxygen, and an inert gas are mixed to produce a mixed gas, and a water generating process, in which the hydrogen and oxygen contained in the mixed gas are reacted within a reaction tube comprising a material having a catalytic action and which is heated, and water is generated.

### Function

In the present invention, a catalytic material which lowers the reaction temperature is employed in the reaction tube which causes the hydrogen and oxygen to react, so that the reaction temperature is lowered, and as a result, water generation becomes possible at low temperatures. Accordingly, when a mixed gas of hydrogen, oxygen, and an inert gas is supplied to a heated reaction tube, the hydrogen and oxygen can be completely reacted at a temperature of 500°C or less within the reaction tube, so that in comparison with the conventional technology, gas containing water can be obtained at low temperatures. The reaction temperature need only be raised to a temperature at which hydrogen and oxygen will completely react or higher, so that accurate temperature control is unnecessary.

Furthermore, when a mixed gas in which the hydrogen concentration and oxygen concentration are accurately controlled is supplied to the reaction tube, a complete reaction of the hydrogen and oxygen occurs within the reaction tube, so that it is possible to obtain a standard water gas containing an accurate water component.

Furthermore, at this time, if plastic materials are completely excluded from the portions in contact with gas, and only metal materials are used, and furthermore, passivation processing is conducted on the metal surfaces, very little gases (water, hydrocarbons, and the like) are emitted from the surfaces, so that it becomes possible to generate water of higher purity at concentrations which are more accurate and in a wider range (ppb - %). Such passivation processing may be conducted, for example, by subjecting SUS316L, which has been subjected to electropolishing or electrolytic composite polishing, to heat treatment in an oxidizing or weakly oxidizing atmosphere having an impurity concentration on the level of a few ppb or less (as in, for example, Japanese Patent Application, No. Sho 63-5389, PCT/JP92/699, and Japanese Patent Application, No. Hei 4-164377).

A point to which special attention should be paid is that, in addition to the fact that very little water is emitted from the surface of the passivated film, this surface itself has an action which is capable of turning hydrogen and oxygen into radicals. Accordingly, the use of a reaction tube having such a passivated film on the inner surface thereof is extremely effective from the point of view of generating water with high accuracy. The fact that it is not the base material itself, but rather the oxides, formed with the base material elements, formed on the surface thereof, which produce a catalytic action capable of turning the hydrogen and oxygen into radicals, is not easily understood and is surprising; in the present invention, the characteristic of the small amounts of water emitted from the surface, and the characteristic of the catalytic action, are skillfully taken advantage of.

When the calibration of the water concentration is conducted, the water concentration which is generated is determined by the hydrogen or oxygen concentration, so that it is sufficient to confirm the flow rate of the hydrogen and oxygen gases, so that calibration can be carried out simply in a short period of time. Furthermore, the gas storage area is extremely small, so that the response speed is very high, and it is possible to supply water at freely selected concentrations.

### Brief Description of the Diagrams

Figure 1 is a conceptual diagram of a standard water generating apparatus in accordance with Embodiment 1.

Figure 2 shows the results of a measurement of the water concentration in a gas flowing from a standard water generating apparatus in accordance with Embodiment 1.

Figure 3 shows the results of a measurement of the oxygen concentration in a gas flowing from a standard water generating apparatus in accordance with Embodiment 1.

Figure 4 is a conceptual diagram of a standard water generating apparatus in accordance with Embodiment 2.

Figure 5 is a conceptual diagram of a standard water generating apparatus in accordance with Embodiment 3.

Figure 6 is a conceptual diagram of a standard water generating apparatus in accordance with Embodiment 4.

Figure 7 is a conceptual diagram of a standard water generating apparatus in accordance with Embodiment 5.

Figure 8 shows the results of a measurement of the water concentration in a gas flowing from a standard water generating apparatus in accordance with Embodiment 5.

Figure 9 shows the results of a measurement of the hydrogen concentration in a gas flowing from a standard water generating apparatus in accordance with Embodiment 5.

Figure 10 is a conceptual diagram of a standard water generating apparatus in accordance with Embodiment 6.

Figure 11 is a conceptual diagram of a standard water generating apparatus in accordance with Embodiment 7.

Figure 12 is a conceptual diagram of a standard water generating apparatus in accordance with Embodiment 8.

Figure 13 is a conceptual diagram showing conventional technology.

Figure 14 is a conceptual diagram showing a conventional example.

Figure 15 is a conceptual diagram showing a conventional example.

Figure 16 is a conceptual diagram showing a conventional example.

### (Description of the References)

- 101: mass flow controller (MFC),
- 102: mass flow controller,
- 103: mass flow controller,
- 104: mixing tube,
- 105: reactor,
- 106: optical dew point meter (water concentration meter),
- 107: galvanic battery-type oxygen analyzer,
- 200: reactor,
- 400: reactor,
- 401: mass flow controller,
- 500: reactor,
- 501: mass flow controller,
- 600: reactor.

### Best Mode for Carrying Out the Invention

Hereinbelow, the present invention will be explained in greater detail using embodiments.

### (Embodiment 1)

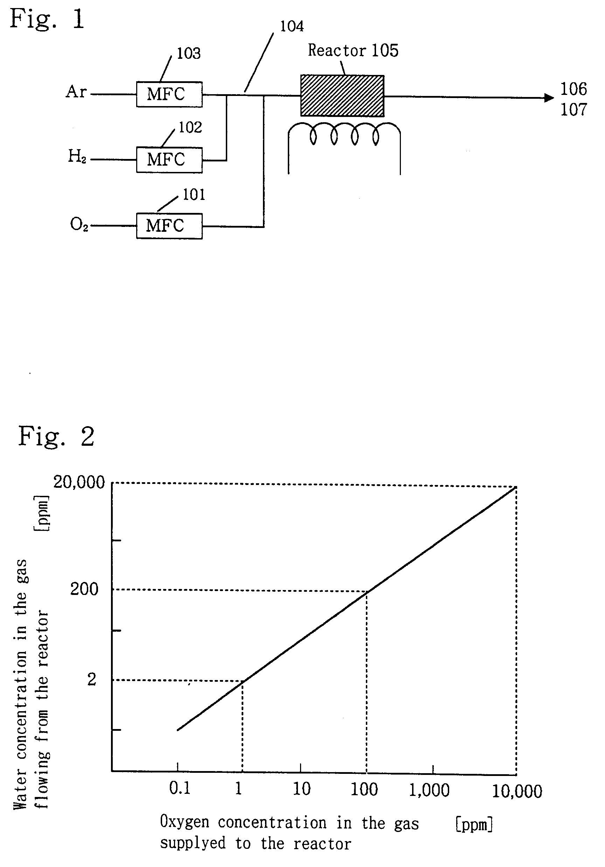

The present embodiment involves the case in which, using a mixed gas of oxygen, hydrogen, and argon, a freely selected water concentration is generated; a schematic view of the apparatus is shown in Figure 1. As shown in Figure 1, the flow rate of the oxygen gas is controlled by mass flow controller (MFC) 101, the flow rate of the hydrogen gas is controlled by mass flow controller 102, and the flow rate of the argon gas is controlled by mass flow controller 103; the three types of gas are passed through a mixing tube 104 where they are mixed, and are introduced into reactor 105. In reactor 105, the hydrogen and oxygen are reacted, and a mixed gas of hydrogen and argon containing a freely selected water component is generated. A SUS316L stainless steel tube (the inner surface of which is electro polished) having a diameter of 1/4" and length of 2 m was used as reactor 105, and using the catalytic action of the surface of the stainless steel tube, a reduction in the reaction temperature was achieved.

Using mass flow controllers 102 and 103, the flow rates of the hydrogen gas and the argon gas were fixed at 50 cc/min and 450 cc/min, respectively, and only the flow rate of the oxygen gas was varied within a range of 0.1 - 10 cc/min using mass flow controller 101, the three mixed gases were introduced into the reactor, and the water concentration and oxygen concentration in the mixed gas of hydrogen and argon flowing out of the reactor were measured using optical dew point meter (water concentration meter) 106 and galvanic battery-type oxygen analyzer 107. High purity gases having an impurity concentration of 1 ppb or less were used as the hydrogen, oxygen, and inert gas which were employed. The temperature of reactor 105 was maintained at 300°C over the entire length thereof.

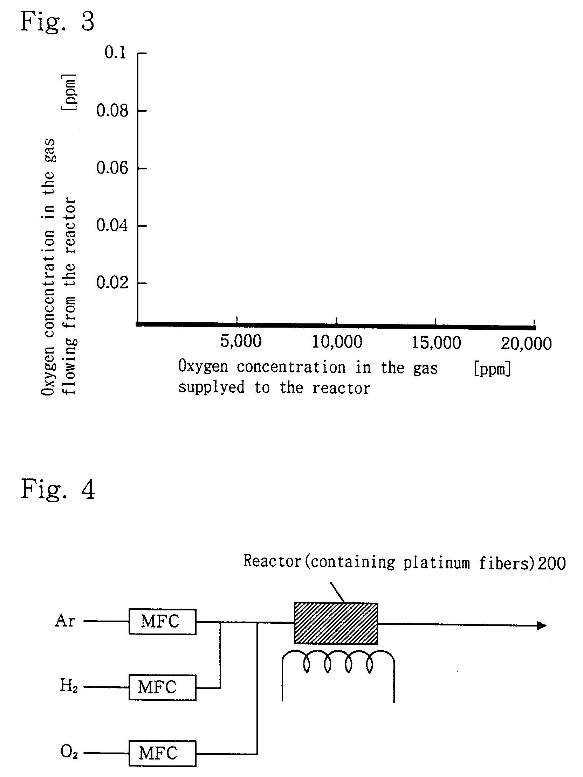

The results of this measurement are shown in Figures 2 and 3. In Figure 2, the horizontal axis shows the oxygen concentration in the mixed gas of hydrogen, oxygen, and argon, while the vertical axis shows the water concentration in the gas flowing from reactor 105. In Figure 3, the horizontal axis indicates the oxygen concentration in the gas supplied to reactor 105, while the vertical axis shows the oxygen concentration flowing from reactor 105. From the results shown in Figure 2, it can be seen that a water concentration was detected in the gas flowing from the reactor which was twice that of the oxygen concentration supplied to reactor 105. The concentration of water generated was within a range of 100 ppb - 2%.

Figure 3 shows that no matter what the oxygen concentration which was supplied to reactor 105, no oxygen was detected in the gas flowing from reactor 105. That is to say, a complete reaction of the hydrogen and oxygen occurred within the reactor, and the water component which was generated depended on the oxygen concentration supplied to reactor 105.

From this, it was determined that in the present embodiment, by means of regulating the oxygen concentration supplied to reactor 105 using mass flow controller 101, it is possible to generate a mixed gas containing a freely selected concentration of water of super high purity.

In the present embodiment, the temperature of reactor 105 was set to 300°C; however, even at a temperature of 100°C, results identical to those described above were obtained, so that it was determined that when stainless steel was used in reactor 105, a temperature range of 100°C - 500°C was appropriate for reactor 105.

In the embodiments described above, 100% facility piping superpure gases were used as the hydrogen, oxygen, and argon (inert gas) gases; however, 100% concentration cylinders or mixed gas cylinders may also be employed.

Furthermore, the temperature of rector 105 was set to 300°C; however, the supplied gas flow rate, the reaction tube volume (reaction time), and the reaction temperature are closely related, so that there are cases in which a temperature of less than 300°C may be used.

Furthermore, SUS316L was used in the present embodiment as the reactor material; however, any metal may be employed insofar as it has a catalytic action which lowers the temperature of reaction of hydrogen and oxygen. For example, embodiments include Hastelloy, nickel, platinum, and the like. Furthermore, metal having a catalytic action need not be used for the entirety of the reaction tube; it is acceptable if such metal is used in only a portion of the reaction tube, for example in only those portions which are in contact with gas.

### (Embodiment 2)

In the present embodiment, a catalytic metal is placed in the reactor in order to reduce the reaction initiation temperature between hydrogen and oxygen gas; a reactor 200, in which platinum fibers, which are a catalytic material, are provided within the reactor of Embodiment 1, is used as the reactor. A schematic diagram of the apparatus is shown in Figure 4. Other points are identical with Embodiment 1. It was confirmed that hydrogen and oxygen reacted completely even when the reactor 200 was at a temperature of 200°C.

### (Embodiment 3)

In the present embodiment, a diluting apparatus is provided before the hydrogen gas supply mass flow controller of Embodiment 1, and the supply of low-concentration hydrogen gas is thus made possible; in this case, the water concentration which is generated can be reduced.

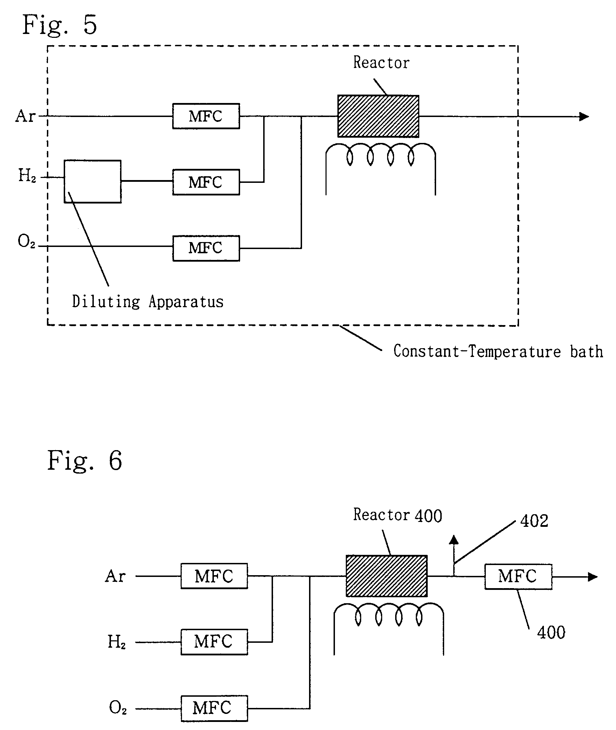

When the concentration is reduced, the emission of water from the piping or the inner walls of the reactor cannot be ignored. In particular, when the temperature of the piping or reactor changes, the amount of water emitted from the inner walls thereof changes, so that it is impossible to conduct water generation at stable concentrations. In the present embodiment, the entirety of the water generating apparatus is installed in a constant temperature bath, and the amount of water emitted from the piping or inner walls of the reactor is held constant. A schematic diagram of this apparatus is shown in Figure 5.

Other points are identical to those of Embodiment 1. Evaluations were conducted which were identical to those of Embodiment 1, and it was determined that since the supplied concentration of hydrogen gas was successfully reduced, it was possible to generate water within a concentration range of from 10 ppt to 2%, in contrast to the water concentration range of 100 ppb - 2% of Embodiment 1.

Furthermore, it was confirmed that water generation at concentrations of 2% or more, and stable low-concentration water generation, were also made possible by means of maintaining the water generating apparatus at a freely selected constant temperature.

### (Embodiment 4)

In the present embodiment, gas containing a freely selected generated water component can be supplied at a freely selected flow rate; a schematic view of the apparatus is shown in Figure 6. In the same manner as the apparatus employed in Embodiment 1, a mass flow controller 401 is provided at the downstream side of the reactor 400, and in order to maintain the pressure between mass flow controller 401 and reactor 400 at a constant level, a blowoff tube 402 for blowing off a portion of the gas flowing from the reactor is provided.

Other points are identical to those in Embodiment 1. By employing the apparatus shown in Figure 6, it is possible to control the flow rate of the gas containing water and to supply gas at freely selected flow rates and water concentrations. For example, in the case in which the full scale of mass flow controller 401 is 100 cc/min, it was determined that flow rate control is possible within a range of 0.1 - 100 cc/min. When the full scale of mass flow controller 401 was 2 L/min, it was determined that flow rate control was possible within a range of 2 cc/min - 2 L/min.

### (Embodiment 5)

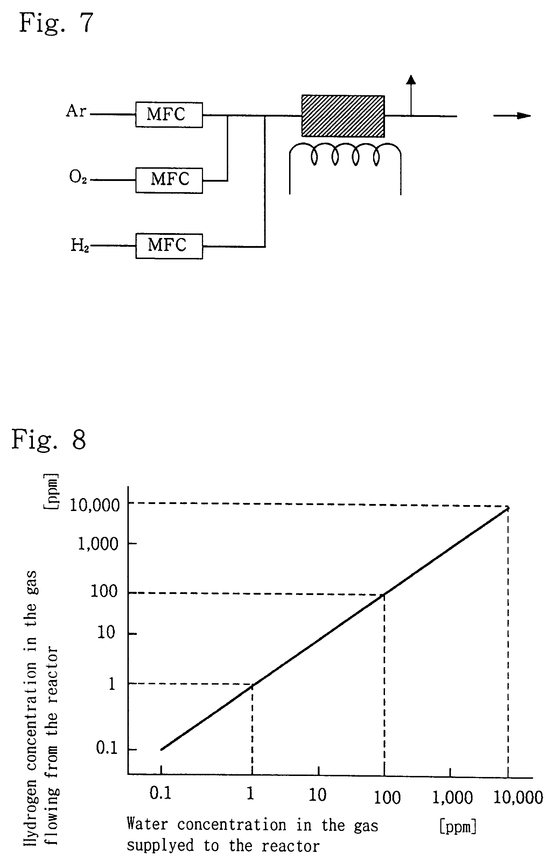

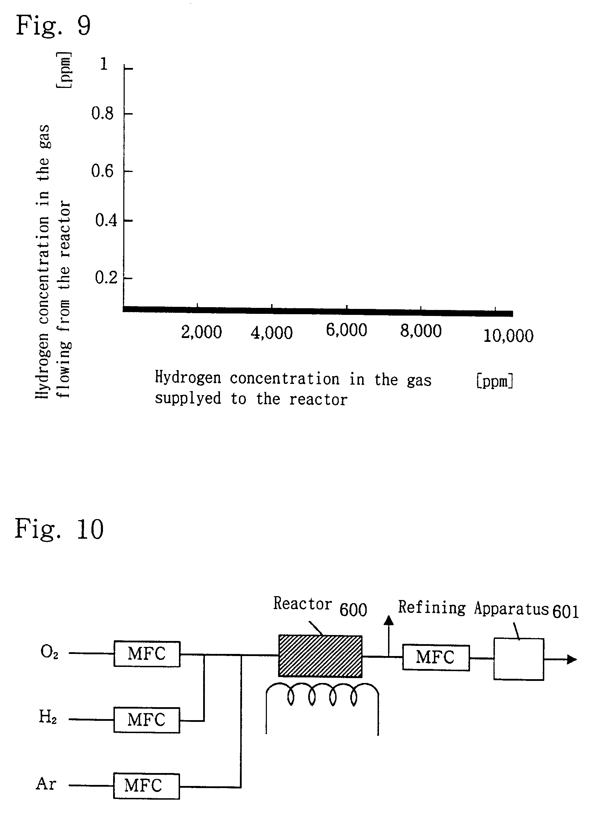

In the present embodiment, by adjusting the hydrogen concentration, the water concentration which is generated can be adjusted. In Embodiments 1 - 4, the hydrogen concentration was set so as to be excessive, and the water concentration was determined by means of the oxygen concentration; however, in the state in which it is the oxygen concentration which is excessive (in the present embodiment, an oxygen concentration of 10%), the water concentration flowing out from reactor 500 is controlled by means of the hydrogen concentration which is supplied. In the present embodiment, the temperature of the reactor was set to 400°C. A schematic view of the apparatus is shown in Figure 7. The results of an evaluation thereof are shown in Figures 8 and 9. It can be seen from the results of Figure 8 that a water concentration which equal to that of the hydrogen concentration supplied to reactor 500 was detected in the gas flowing from reactor 500. The water generation concentration was within a range of 100 ppb - 1%. From the results shown in Figure 9, it can be seen that no hydrogen gas was detected in the gas flowing from reactor 500, independent of the hydrogen concentration which was supplied to reactor 500. In other words, a complete reaction of the hydrogen and the oxygen occurred in reactor 500, and a water component corresponding to the hydrogen concentration supplied to reactor 500 was generated.

From these results, it was determined that by controlling the hydrogen concentration supplied to reactor 500 in the apparatus of the present invention using mass flow controller 501, the present embodiment could be applied to an apparatus for the generation of a mixed gas containing a freely selected concentration of super pure water.

Furthermore, it was confirmed that even in the case of a two to one ratio in the flow rate of hydrogen and oxygen gas, the present embodiment could be applied to an apparatus for the generation of mixed gas containing a freely selected concentration of super pure water.

### (Embodiment 6)

In the present embodiment, the hydrogen gas or oxygen gas remaining in the gas containing a generated water component is removed; in the case in which one or the other of hydrogen gas and oxygen gas is supplied in excess and reaction is conducted, as in Embodiments 1-5, there are cases in which the excessive hydrogen or oxygen component remains in the gas containing water which is produced. Accordingly, a refining apparatus 601 which is capable of selectively removing hydrogen or oxygen is installed on the downstream side of reactor 600, and the apparatus supplies gas containing a freely selected water concentration which does not contain hydrogen or oxygen; this apparatus is shown in Figure 10. The generation of gas containing neither hydrogen or oxygen, and containing only water was confirmed.

### (Embodiment 7)

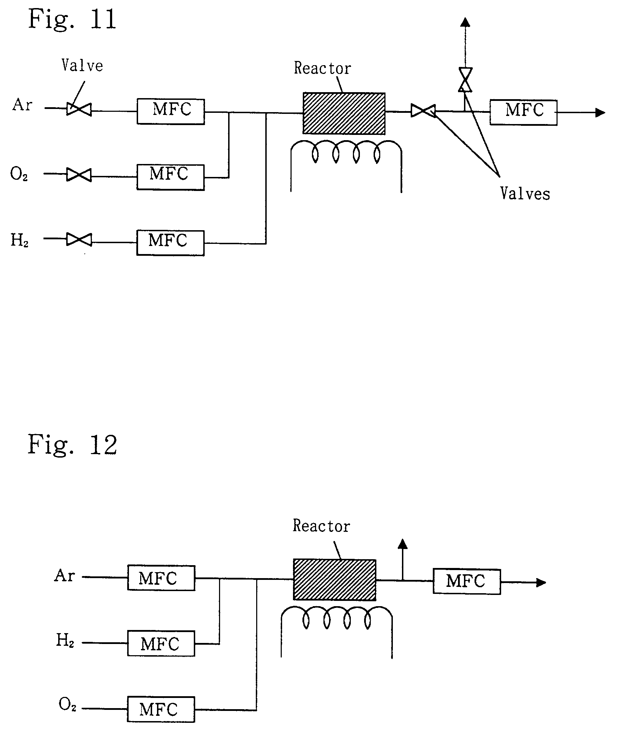

In the present embodiment, a standard water generating apparatus having a function for stopping gas is used; considering, with respect to the apparatus in Embodiments 1-6, the occurrence of cases when the gas can not be stopped, the standard water generating apparatus is provided with a metal stop valve; a schematic view of the apparatus is shown in Figure 11. The generation of gas containing a freely selected water component was confirmed.

### (Embodiment 8)

In the present embodiment, the interior of the standard water generating apparatus was purged using inert gas, or at least a portion of the standard water generating apparatus was subjected to baking in order to accelerate the start-up of the standard water generating apparatus; the structure of the apparatus was identical to that of Figure 6, and is depicted again in Figure 12. The stable generation of gas containing 1 ppm of water was confirmed within 30 seconds from the start-up of the standard water generating apparatus.

### Industrial Applicability

In accordance with the present invention which was described above, it is possible to generate gas containing a wide range of water concentrations, from low concentrations on the order of ppt, to high concentrations on the order of %, with super-high purity and without variations in water concentration and with extremely high reliability. Furthermore, it is also possible to set the flow rate to any desired level. Calibration can be conducted by simply confirming the flow rate, so that such calibration can be conducted simply and in a short period of time. Furthermore, the present apparatus has an extremely small gas storage area, so that the response speed is extremely high, and the start-up of the apparatus is also extremely quick.

## Claims

1. A method for generating water by reacting hydrogen and oxygen, characterized in comprising: a mixed gas producing process, wherein hydrogen, oxygen, and an inert gas are mixed and a first mixed gas is produced; and a water generating process, wherein said first mixed gas is introduced into a reaction tube comprising a material having a catalytic action capable of turning hydrogen and oxygen into radicals, and generating water by reacting the hydrogen and oxygen contained in said first mixed gas by heating the interior of said reaction tube.

2. A water generating method in accordance with Claim 1, characterized in that the water generating process is conducted at temperatures within a range of 50°C - 500°C.

3. A water generating method in accordance with Claim 2, characterized in that the water generating process is conducted at a temperature within a range of 300 - 500°C.

4. A water generating method in accordance with one of Claims 1 through 3, characterized in that a material having a catalytic action is placed within the reaction tube.

5. A water generating method in accordance with one of Claims 1 through 4, characterized in that in the mixed gas producing process, a mixed gas wherein the ratio of hydrogen and oxygen concentrations is freely controlled is produced, and furthermore, in the water generating process, a mixed gas containing a freely determined water concentration is generated by causing the hydrogen and oxygen to react completely.
